# FASCICULE DE BREVET EUROPEEN

(11) **EP 0 722 428 B1**
(45) Date de publication et mention de la délivrance du brevet: **14.06.2000**
(21) Numéro de dépôt: 95925005.1
(22) Date de dépôt: 04.07.1995
(51) Int. Cl.: C03C 25/10, C08G 59/00

(54) **COMPOSITION D'ENSIMAGE POUR FILS DE VERRE, PROCEDE UTILISANT CETTE COMPOSITION ET PRODUITS RESULTANTS**
SCHLICHTEMITTEL FÜR GLASFASERN, VERFAHREN ZU SEINER VERWENDUNG UND HERGESTELLTE PRODUKTE
GLASS FIBRE SIZE COMPOSITION, METHOD USING SAME, AND RESULTING PRODUCTS

(30) Priorité: 05.07.1994 FR 9408224
(43) Date de publication de la demande: 24.07.1996
(73) Titulaire: VETROTEX FRANCE, 73000 Chambéry (FR)
(72) Inventeur: MOIREAU, Patrick, F-73190 Curienne (FR)
(74) Mandataire: Breton, Jean-Claude
(86) Numéro de dépôt international: FR9500892
(87) Numéro de publication internationale: WO9601233

(56) Documents cités:
- EP-A- 0 243 275
- EP-A- 0 657 395
- EP-A- 0 657 396
- US-A- 3 473 950
- US-A- 3 853 605
- US-A- 4 459 398
- US-A- 4 530 860
- US-A- 4 604 325
- US-A- 4 609 591
- US-A- 4 777 084
- US-A- 5 055 119
- DATABASE WPI Section Ch, Week 7842 Derwent Publications Ltd., London, GB; AN 78-74930A & JP-A-53 102 953 ( SUMITOMO CHEMICAL KK) , 7 Septembre 1978

## Description

La présente invention concerne une composition d'ensimage pour fils de verre, ladite composition réagissant sous l'action de la chaleur. La présente invention concerne également un procédé de production de fils de verre ensimés destinés, notamment, à renforcer des matières organiques et/ou inorganiques, ledit procédé utilisant la composition précédemment mentionnée, ainsi que les fils de verre obtenus et les composites réalisés à partir desdits fils.

Dans la suite du texte, par « polymérisation », « polymériser », « polymérisable »..., on entend respectivement « polymérisation et/ou réticulation », « polymériser et/ou réticuler », « polymérisable et/ou réticulable »...

La fabrication de fils de verre de renforcement se fait de façon connue à partir de filets de verre fondu s'écoulant des orifices d'une ou plusieurs filières. Ces filets sont étirés mécaniquement sous forme de filaments continus, puis les filaments sont rassemblés en un ou plusieurs fils de base, lesquels fils sont ensuite collectés sur des supports en mouvement ou subissent d'autres traitements avant collecte selon les applications recherchées.

Avant leur rassemblement sous forme de fils, les filaments sont revêtus d'un ensimage par passage sur un organe ensimeur alimenté en continu. Ce dépôt d'ensimage est nécessaire à l'obtention des fils et permet l'association des fils avec d'autres matières, telles que des matières organiques et/ou inorganiques pour réaliser des composites.

L'ensimage, en effet, joue en premier lieu un rôle de lubrifiant et protège les fils de l'abrasion résultant du frottement à grande vitesse des fils sur divers organes tels que des organes de guidage, lors du procédé précédemment cité.

L'ensimage assure également, dans la plupart des cas, l'intégrité des fils susmentionnés, c'est-à-dire la liaison des filaments qui les constituent entre eux. Cette intégrité obtenue notamment après polymérisation de l'ensimage déposé sur les fils, est généralement recherchée dans les applications textiles où les fils sont soumis à de fortes contraintes mécaniques. En effet, si les filaments constituant les fils sont peu solidaires les uns des autres, ils se rompent plus facilement au cours de telles applications et viennent perturber le fonctionnement des machine textiles. De façon générale, l'intégrité des fils est souvent recherchée, les fils non intègres étant considérés comme difficiles à manipuler.

L'ensimage confère par ailleurs aux fils la possibilité d'être associés à différentes matières à renforcer en vue de la réalisation de pièces composites, en facilitant le mouillage et/ou l'imprégnation des fils par les matières à renforcer et en aidant à la création de liaisons entre lesdits fils et lesdites matières. De la qualité de l'adhérence de la matière aux fils et de l'aptitude au mouillage et/ou à l'imprégnation des fils par la matière dépendent notamment les propriétés mécaniques des composites obtenus à partir de ladite matière et desdits fils.

L'adéquation des ensimages aux procédés utilisés implique la recherche de compositions d'ensimage suffisamment stables et compatibles avec les vitesses d'étirage des filaments devant les traverser (plusieurs dizaines de mètres par seconde). Notamment, les ensimages doivent résister au cisaillement induit par le passage des filaments et bien mouiller la surface des filaments auxdites vitesses. Dans le cas où les ensimages utilisés polymérisent sous l'action de la chaleur, il est de plus nécessaire que lesdits ensimages présentent une température de réaction suffisamment élevée pour demeurer stables sous filière. Il est également souhaitable que de tels ensimages présentent, après polymérisation, un taux de conversion important (ce taux correspondant au rapport entre le taux de fonctions ayant réagi dans l'ensimage après traitement thermique et le taux de fonctions réactives dans l'ensimage avant traitement thermique) pour garantir l'obtention de fils de verre ensimés de qualité constante (un ensimage présentant un faible taux de conversion étant susceptible d'évoluer dans le temps) et pour garantir une perte minimale d'ensimage dans les applications textiles. De plus, dans certains cas, un taux de conversion élevé contribue à l'amélioration de caractéristiques des fils telles que des caractéristiques mécaniques.

A ces considérations techniques s'ajoutent des considérations économiques et la facilité de mise en oeuvre des ensimages. Pour cette dernière raison notamment, la plupart des ensimages actuellement utilisés sont des ensimages aqueux simples à manipuler, mais devant être déposés en grandes quantités sur les filaments pour être efficaces. Ces ensimages comprennent de l'eau en quantité importante (90% en poids de l'ensimage pour des raisons de viscosité notamment, ceci conduisant à des fils ensimés contenant de 6 à 12 % en poids d'eau), ce qui oblige à prévoir une étape de séchage des fils avant toute utilisation des fils pour renforcer des matières organiques et/ou inorganiques, l'eau pouvant nuire à la bonne adhérence entre lesdits fils et lesdites matières. Ces séchages sont longs et coûteux, doivent être adaptés aux conditions de fabrication des fils (ils dépendent de la composition d'ensimage utilisée, de la masse des fils à sécher...) et leur efficacité n'est pas toujours optimale (notamment au niveau des enroulements de fils ou des nappes de fils entremêlés appelées « mats »). De plus, lorsqu'ils sont faits pendant l'opération de fibrage (c'est-à-dire avant collecte des fils obtenus par rassemblement des filaments), au niveau des filaments (WO 92/05122) ou au niveau des fils (US-A-3 853 605), ils nécessitent l'implantation de dispositifs de séchage sous chaque filière et lorsqu'ils sont faits sur des enroulements finis de fils, ils entraînent des risques de migration irrégulière et/ou sélective des composants de l'ensimage au sein des enroulements (les ensimages aqueux ayant déjà tendance, dès le dépôt d'ensimage, à se répartir sur les fils de façon irrégulière du fait de leur nature), auxquels viennent s'ajouter dans certains cas des phénomènes de coloration des fils ou de déformation des enroulements.

La déformation des enroulements s'observe également en l'absence de séchage, sur les enroulements à bords droits (stratifils) de fils fins (c'est-à-dire des fils présentant un titre de l'ordre de 300 à 600 tex ou moins) revêtus d'ensimages aqueux, lesdits enroulements présentant une tenue généralement insuffisante (la tenue de tels enroulements ne pouvant être obtenue que pour des angles de croisure importants difficiles à obtenir dans les procédés traditionnels de réalisation de fils ensimés. Par angle de croisure, il faut entendre l'angle qui existe entre les spires de fil appartenant à deux couches consécutives et dont la bissectrice est contenue dans un plan perpendiculaire à l'axe de l'enroulement).

Quelques rares brevets proposent des solutions pour réduire les problèmes de séchage des filaments ou fils ensimés en recourant à des ensimages non aqueux mais les ensimages décrits dans ces brevets font généralement appel à des solvants organiques délicats à manipuler et pouvant nuire à la santé des personnes se trouvant alentour parce que toxiques, et/ou posent des problèmes de viscosité qu'il convient de résoudre en chauffant lesdits ensimages (US 4 604 325) ou en rajoutant des agents adéquats (US 4 609 591).

L'utilisation de tels ensimages nécessite également, dans de nombreux cas, l'implantation de dispositifs particuliers au dessous de chaque filière; il est notamment nécessaire, lorsque les fils revêtus de ces ensimages sont collectés sous forme d'enroulements, de traiter lesdits fils avant obtention des enroulements finis afin d'éviter un collage important des spires de chaque enroulement entre elles, ledit collage rendant le dévidage des fils difficile. Ces traitements, dont l'efficacité dépend des conditions opératoires, consistent, par exemple, à polymériser l'ensimage se trouvant sur les fils en les soumettant, sur au moins une partie de leur trajet, à l'action de rayonnements ultraviolets, afin de leur conférer une intégrité suffisante et de les rendre manipulables (US-A-5 049 407). Dans ce cas, cependant, l'ensimage polymérisé empêche le glissement des filaments les uns par rapport aux autres, cette absence de mobilité étant préjudiciable à la coupe des fils (les fils éclatant à la coupe par dégradation mécanique de l'ensimage) et pouvant éventuellement poser des problèmes dans les applications textiles où les fils utilisés doivent être à la fois intègres et souples (la souplesse des fils ensimés étant liée à la souplesse de l'ensimage).

Un fil manipulable aisément, revêtu d'un ensimage purement organique, peut être obtenu sans pour cela avoir été soumis à un traitement de polymérisation. Le brevet US-A-4 530 860 décrit de tels ensimages, qui comprennent un pourcentage important d'agents filmogènes, jouant alors un rôle d'agents de collage et conférant une intégrité aux fils, ladite intégrité rendant les fils plus facilement manipulables.

La présente invention a pour objet une composition d'ensimage améliorée, ne présentant pas les inconvénients précédemment mentionnés, cette composition étant destinée à revêtir des fils de verre et étant apte à polymériser sous l'action de la chaleur, cette composition rendant les fils ensimés aisément manipulables, même avant polymérisation, et leur conférant une souplesse compatible avec leurs traitements ultérieurs, cette composition conférant une bonne intégrité aux fils après polymérisation et présentant un taux de conversion important, cette composition protégeant en outre efficacement les fils de l'abrasion, leur conférant la possibilité d'être associés à différentes matières à renforcer en vue de réaliser des pièces composites présentant de bonnes propriétés mécaniques, étant particulièrement stable, notamment sous filière, et étant compatible avec les vitesses d'étirage des filaments.

La présente invention a également pour objet un procédé amélioré de fabrication de fils de verre ensimés, ainsi que des fils de verre ensimés de manipulation facile et présentant des caractéristiques améliorées, lesdits fils étant aptes à renforcer efficacement des matières organiques et/ou inorganiques pour la réalisation de composites.

La composition d'ensimage selon l'invention est constituée d'une solution de viscosité inférieure ou égale à 400 cP comprenant moins de 5 % en poids de solvant et comprenant au moins un système de base polymérisable thermiquement, ledit système de base comprenant au moins 60 % en poids d'un ou plusieurs composants de masse moléculaire inférieure à 750 et, de préférence, inférieure à 500, présentant au moins une fonction réactive époxy.

Dans une forme de la composition selon l'invention, le système de base comprend également un ou plusieurs composants de masse moléculaire plus élevée présentant au moins une fonction réactive époxy et/ou un ou plusieurs composants présentant une fonction réactive hydroxy et/ou une fonction réactive vinyléther.

La composition selon l'invention comprend en outre au moins un amorceur thermique acide de Lewis ou base de Lewis.

L'invention concerne aussi un procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils la composition d'ensimage précédemment définie.

Dans un mode de réalisation avantageux du procédé selon l'invention, la composition d'ensimage est soumise à un traitement thermique en présence d'au moins un amorceur thermique acide de Lewis ou base de Lewis pendant ou après collecte des fils revêtus de la composition.

L'invention concerne encore des fils revêtus d'un ensimage présentant la composition précédemment définie et/ou obtenus selon le procédé ci-dessus mentionné.

Dans la composition selon l'invention, les solvants éventuels sont essentiellement des solvants organiques nécessaires à la mise en solution de certains composés polymérisables. La présence de ces solvants en quantité limitée ne requiert pas de traitements particuliers pour les éliminer ; dans la majeure partie des cas, les ensimages selon l'invention sont, de surcroît, totalement dénués de solvant, c'est-à-dire de composés jouant uniquement un rôle de solvant dans la solution.

Du fait de sa faible viscosité (inférieure ou égale à 400 cP et, de préférence, inférieure ou égale à 200 cP), la composition d'ensimage selon l'invention est compatible avec les conditions d'obtention des fils de verre imposées par le procédé direct, c'est-à-dire qu'elle peut être utilisée de façon satisfaisante quelle que soit la vitesse d'étirage des filaments amenés à la traverser (plusieurs dizaines de mètres par seconde) et le diamètre des filaments. Cette composition présente également une vitesse de mouillage sur le fil compatible avec la vitesse d'étirage des fils.

Par « système de base polymérisable thermiquement » selon l'invention, il faut comprendre le ou les composés indispensables à l'ensimage et ayant pour fonction essentielle de participer à la structure de l'ensimage, ces composés étant aptes à polymériser thermiquement. Le système de base représente généralement entre 60 et 100 % en poids de la composition d'ensimage selon l'invention et, de préférence, entre 70 et 90 % en poids de la composition.

Les composants à fonction(s) réactive(s) époxy pouvant être utilisés dans le système de base comprennent généralement de une à quatre fonctionnalités oxiranne greffées sur des groupements alkyle, cycloalkyle, aromatique, ..., et peuvent également comprendre des fonctions éther et/ou hydroxyle et/ou ester et/ou amine tertiaire...

Ces composants peuvent être un ou plusieurs des composants suivants : composants monofonctionnels tels que des alkyl glycidyl éthers à chaîne aliphatique C₄-C₁₆... ou des crésyl-, ou phényl-, ou nonylphényl-, ou p-tert-butyl phényl-, ou 2-éthylhexyl-, etc..., glycidyl éthers, des limonènes époxydes, des cyclohéxènes monoxydes, etc... ; composants difonctionnels tels que des 1,4 butanediol-, ou néopentylglycol-, ou résorcinol-, ou cyclohexane diméthanol-, ou 1,6 hexanediol-, ou dibromonéopentylglycol-, etc... diglycidyl éthers, des dérivés diépoxydés des bisphénols A ou F, des 3,4-époxycyclohexylméthyl-3,4- époxycyclohexane carboxylates, des bis-(3,4-époxycyclohexyl) adipates, des polyglycol diépoxydes, des diglycidyl esters de l'anhydride hexahydrophtalique, des diglycidyl hydantoïnes, etc... ; composants présentant plus de deux fonctions réactives identiques tels que des triméthyloléthane-, ou, triméthylolpropane-, etc... triglycidyléthers, des triglycidyl éthers d'huile de palme, des triglycidyl éthers du paraaminophénol, des tétra (paraglycidoxyphényl) éthanes, des 4, 4'- (diglycidyl amino) diphényl méthanes, des polyglycidyl éthers d'un polyol aliphatique, des polybutadiènes époxydés, des résines époxyphénol novolaques, ou époxy crésol novolaques, etc...

En plus du ou des composants de masse moléculaire inférieure à 750 (ou 500) présentant au moins une fonction réactive époxy, le système de base peut comprendre un ou plusieurs autres composés polymérisables thermiquement, notamment un ou plusieurs composants de masse moléculaire plus élevée présentant au moins une fonction réactive époxy et/ou un ou plusieurs composants présentant au moins une fonction réactive hydroxy et/ou vinyléther.

De préférence, la proportion, dans le système de base, de composant(s) présentant au moins une fonction réactive hydroxy mais ne présentant pas de fonction réactive époxy est inférieure ou égale à 40 % en poids dudit système, ces composants pouvant ralentir la cinétique de polymérisation de l'ensimage et pouvant le rendre moins résistant à l'eau ou à des agents chimiques.

De préférence également, la proportion, dans le système de base, de composant(s) présentant au moins une fonction réactive vinyléther mais ne présentant pas de fonction réactive époxy est inférieure ou égale à 40 % en poids dudit système.

Les composants à fonction(s) réactive(s) hydroxy pouvant être utilisés dans le système de base sont essentiellement des alcools ou des polyols et peuvent servir en tant que flexibilisants et/ou réticulants ( ils augmentent alors le taux de réticulation de l'ensimage) en fonction de leur conformation spatiale et du nombre de leurs groupements réactifs.

Ces composants hydroxy peuvent être un ou plusieurs des composants suivants : caprolactones polyols ou leurs dérivés, polyols dérivés de l'éthylène glycol ou du propylène glycol, triméthylolpropanes éthoxylés ou propoxylés, pentaérythrytols éthoxylés ou propoxylés, polyoxypropylène tétrols, polybutadiènes hydroxylés, etc...

Les composants à fonction(s) réactive(s) vinyléther peuvent être un ou plusieurs des composants suivants : composants monofonctionnels tels que des hydroxyalkylvinyléthers, des monomères esters aliphatiques ou aromatiques à terminaisons éther vinylique, des 1,4 cyclohexane diméthanol monovinyléther... ; composants polyfonctionnels tels que des cyclohexane diméthanol-, ou triéthylèneglycol-, etc... divinyléthers, des oligomères uréthanes aliphatiques ou aromatiques à terminaisons vinyléthers, etc...

Le ou les composants à fonction(s) époxy et/ou hydroxy et/ou vinyléther utilisés dans le système de base de la composition selon l'invention peuvent présenter une (composants monofonctionnels) ou plusieurs fonctions réactives identiques (composants polyfonctionnels) ou différentes parmi les fonctions époxy, hydroxy et vinyléther. De préférence, dans le système de base, la proportion de composant(s) monofonctionnel(s) est comprise entre 0 et 75 % en poids du système de base et la proportion de composant(s) polyfonctionnel(s) est comprise entre 10 et 100 % en poids du système de base, la proportion de composant(s) comprenant plus de deux fonctions réactives identiques étant comprise entre 0 et 70 % en poids du système de base.

Selon un mode de réalisation préféré de l'invention, le système de base de la composition selon l'invention est constitué d'un ou plusieurs composants présentant au moins une fonction réactive époxy et, éventuellement, d'un ou plusieurs composants présentant au moins une fonction réactive hydroxy et/ou une fonction réactive vinyléther.

Dans un autre mode de réalisation de la présente invention, le système de base est constitué d'un ou plusieurs composants de masse moléculaire inférieure à 750 et, de préférence, inférieure à 500.

De préférence, le ou les composants de masse moléculaire inférieure à 750 (ou 500) présents dans le système de base de la composition selon l'invention sont des monomères (mono ou polyfonctionnels comme explicité précédemment), mais ce système de base peut éventuellement comprendre des composants de masse moléculaire inférieure à 750 sous forme d'oligomères ou de polymères à fonctions partiellement polymérisées.

Comme indiqué précédemment, la composition d'ensimage comprend préférentiellement, en plus du système de base, au moins un amorceur thermique acide ou base de Lewis permettant la polymérisation de l'ensimage sous l'action de la chaleur. Cet amorceur peut également être apporté à ladite composition par l'intermédiaire d'une matière associée aux fils de verre ensimés avant polymérisation, comme mentionné ultérieurement dans le procédé selon l'invention.

Par « amorceur thermique acide ou base de Lewis », on entend, selon l'invention, tout acide ou base de Lewis et, plus généralement, tout composé susceptible, sous l'action de la chaleur, de générer un acide ou une base de Lewis, ces acides ou bases induisant, sous l'action de la chaleur, la polymérisation cationique ou anionique des composants époxy et, le cas échéant, des composants hydroxy et/ou vinyléther. Ces amorceurs sont aussi désignés par « catalyseurs cationiques ou anioniques ». A titre d'exemples, on peut citer les dérivés halogénés de Sn, Al, Zn, B, Si, Fe, Ti, Mg, Sb ou les complexes sur des bases de métaux ou de métalloïdes halogénés tels que les complexes diéthyléther, tétrahydrofuranne, amines aliphatiques ou amines aromatiques... de BF₃ ou BCl₃, ou les complexes amines de PF₅ OU AsF₅... comme amorceurs thermiques acide de Lewis ; les amorceurs thermiques bases de Lewis sont préférentiellement choisis parmi les amines tertiaires ou secondaires cycliques ou avec cycle aromatique (pyridine, 2,4,6-tris diméthylaminoéthyl phénol, benzyl diméthyl amine, pipéridine, dérivés imidazole, 2-éthyl-4-méthyl imidazole, N-C₁-C₁₂ alkyl imidazoles, benzimidazole, amino oxadiazoles, amines tertiaires diaza aromatiques (méthyl pyrazines), diallyl tétrahydro dipyridyl...) ou présentant des doubles liaisons (tétraméthyl guanidine, heptaméthyl isobiguanide...), ou peuvent également être choisis parmi des mélanges complexes (dérivés alkoxylés de métaux, triéthanolamine borate ou borates esters avec métaux chélatés...), ou d'autres amines ou dérivés aminés appropriés (triéthylamine, diéthanolamine, triéthanolamine, oxydes d'amines tertiaires...). Les amorceurs acide de Lewis peuvent être associés à des donneurs d'hydrogène jouant le rôle d'accélérateurs, tels que le carbonate de propylène ou le gamma-butyrolactone. Le taux d'amorceurs thermiques acide ou base de Lewis présents dans la composition d'ensimage et/ou apportés à ladite composition pour permettre une bonne polymérisation, est compris entre 0,5 et 6 % en poids et, de façon préférée, entre 1,5 et 5 % en poids de ladite composition.

Eventuellement, la composition d'ensimage peut comprendre d'autres composés permettant la polymérisation de l'ensimage.

La composition selon l'invention peut également comprendre des additifs en faible quantité, ces additifs donnant des propriétés particulières à la composition d'ensimage mais ne participant pas de manière essentielle à la structure de l'ensimage, contrairement au système de base. Même si ces additifs sont à distinguer du système de base, ils peuvent être néanmoins polymérisables thermiquement comme les composés du système de base.

La composition selon l'invention peut ainsi comprendre, à titre d'additif, au moins un agent de couplage permettant d'accrocher l'ensimage sur le verre, la proportion du ou des agents de couplage étant comprise entre 0 et 20 % en poids de l'ensimage et étant, de préférence, inférieure ou égale à 15 % en poids de l'ensimage. De préférence, ces agents présentent une masse moléculaire inférieure à 500 et ne portent pas de fonctions aminées primaires. Ces agents peuvent être un ou plusieurs des composants suivants : silanes tels que le gamma-glycidoxypropyltriméthoxysilane, le gamma-méthacryloxy-propyltriméthoxysilane, le triméthoxysilane polyéthoxylé-propoxylé, le gamma-acryloxypropyl triméthoxysilane, le vinyl triméthoxysilane, etc... ; titanates, zirconates, siloxannes, etc...

La composition selon l'invention peut également comprendre, à titre d'additif, au moins un agent filmogène jouant uniquement un rôle d'agent de glissement et facilitant le fibrage, dans des proportions comprises entre 0 et 15 % en poids et de préférence inférieures ou égales à 10% en poids. La présence de ce ou ces agents empêche un frottement important des filaments sur le dispositif ensimeur lorsque les filaments sont étirés à grande vitesse (plus de 40 m/s) et/ou lorsqu'ils sont très fins, ces agents étant cependant coûteux et pouvant entraîner une diminution des caractéristiques mécaniques des composites. Ces agents de fibrage peuvent être un ou plusieurs des composants suivants : silicones, siloxannes ou polysiloxannes tels que le glycidyl(n)polydiméthyl siloxanne, l'alpha-oméga acryloxypolydiméthyl siloxanne, etc..., dérivés de silicones tels que des huiles de silicone, etc...

La composition selon l'invention peut également comprendre, à titre d'additif, au moins un agent de mise en oeuvre textile jouant essentiellement un rôle de lubrifiant, dans des proportions comprises entre 0 et 15 % en poids et, de préférence, comprises entre 0 et 10 % en poids. Ces agents textiles sont préférentiellement un ou plusieurs des composants suivants : esters gras (éventuellement éthoxylés ou propoxylés), dérivés des glycols (notamment de l'éthylène ou du propylène glycol), tels que des palmitates d'isopropyle ou de cétyle, des stéarates d'isobutyle, des laurates de décyle, des adipates d'éthylène glycol, des polyéthylène glycols ou des polypropylène glycols de poids moléculaire inférieur à 2000, des stéarates d'isopropyle, etc...

L'ensimage peut également comprendre, à titre d'additif, au moins un agent d'adaptation aux matières à renforcer, dans le cas des matières cimentaires notamment.

La composition d'ensimage selon l'invention protège efficacement les fils de l'abrasion, est stable notamment sous filière (la composition selon l'invention ne polymérisant pas réellement avant 100°C et étant soumise sous filière à des températures n'excédant pas 70°C), est compatible avec les vitesses d'étirage des filaments et ne nécessite pas le recours à une opération de séchage avant polymérisation ou le recours à un traitement particulier entre le dépôt sur le fil et l'opération de collecte des fils ensimés.

Par ailleurs, lorsque la composition selon l'invention est déposée sur les filaments en cours d'étirage, elle se répartit très rapidement sur toute leur surface et forme un véritable film de protection pour chacun d'entre eux. Le fil obtenu par rassemblement des filaments et revêtu de la composition non traitée thermiquement (c'est-à-dire non encore polymérisée) est ainsi constitué d'un faisceau de filaments gainés qui peuvent glisser les uns sur les autres, ce fil présentant alors une souplesse importante, particulièrement avantageuse dans le cas où ce fil est destiné à être coupé, le gainage des filaments offrant en outre une protection supplémentaire contre l'abrasion. Un tel fil ne présente pas une intégrité au sens ordinaire du terme, c'est-à-dire qu'il n'est pas constitué de filaments fixés entre eux grâce notamment à une liaison par collage provoquée par un ou plusieurs constituants de l'ensimage telle que peuvent la provoquer des agents filmogènes présents en quantité importante dans un ensimage. Malgré cela, ce fil revêtu de la composition non encore polymérisée est aisément manipulable et, lorsqu'il est bobiné sous forme d'enroulements, peut facilement être extrait des enroulements sans avoir subi au préalable de traitement de polymérisation de l'ensimage. Les fils revêtus de la composition d'ensimage non encore polymérisée ont par ailleurs une très bonne aptitude au mouillage et à l'imprégnation par des matières à renforcer, l'imprégnation pouvant ainsi se faire plus rapidement (gain de productivité) et les composites obtenus présentant ainsi un aspect plus homogène et certaines propriétés mécaniques améliorées.

L'intégrité proprement dite des fils par collage des filaments les constituant est obtenue après polymérisation de la composition d'ensimage par action de la chaleur. Cette intégrité est recherchée au niveau des fils devant être soumis à de fortes contraintes mécaniques, par exemple dans des applications textiles, ou au niveau des fils coupés destinés à renforcer des matières organiques et/ou inorganiques. Il est préférable, dans de tels cas, d'effectuer la polymérisation de l'ensimage avant respectivement la mise en oeuvre des fils dans des applications textiles ou l'association des fils coupés avec une matière à renforcer.

L'intégrité obtenue après polymérisation de l'ensimage est particulièrement importante alors que le taux d'ensimage polymérisé sur les fils est relativement faible (la perte au feu des fils revêtus de la composition d'ensimage et/ou obtenus selon le procédé de l'invention n'excédant pas 3 % en poids). La quantité de composition d'ensimage devant être déposée sur les fils pour être efficace est avantageusement peu importante et permet cependant d'obtenir des fils présentant de très bonnes caractéristiques, dont l'intégrité (l'intégrité obtenue étant élevée même pour des taux d'ensimage déposé sur les filaments de l'ordre de 0,6 % en poids). Cette intégrité obtenue en polymérisant une composition selon l'invention en présence d'un amorceur acide de Lewis ou, plus encore, en présence d'un amorceur base de Lewis est meilleure que l'intégrité obtenue dans les mêmes conditions en utilisant la plupart des compositions d'ensimage traditionnelles.

La composition d'ensimage selon l'invention présente également après polymérisation un taux de conversion important.

On observe que, de façon surprenante, des propriétés comme la résistance à la traction des fils selon l'invention sont meilleures après vieillissement que celles obtenues avant vieillissement des fils. On remarque aussi que les propriétés de résistance mécanique des fils revêtus d'un ensimage selon l'invention comprenant une base de Lewis sont meilleures que celles des fils revêtus d'un ensimage selon l'invention comprenant un acide de Lewis, pour une perte au feu plus faible.

Les fils selon l'invention peuvent être associés avantageusement à différentes matières à renforcer en vue de la réalisation de pièces composites présentant de bonnes propriétés mécaniques. La composition selon l'invention rend les fils particulièrement compatibles avec les matières à renforcer, notamment avec les matières organiques et en particulier les matières époxy, mais également avec les matières minérales telles que les matières cimentaires. Elle permet également l'imprégnation des fils ensimés par la matière à renforcer, cette imprégnation étant facilitée dans le cas des fils revêtus de la composition sous sa forme non polymérisée. La composition d'ensimage est particulièrement adaptée pour la production de fils continus collectés sous forme de stratifils, de gâteaux, de cops, de mats..., ou pour la production de fils coupés, ces différents fils étant composés de filaments de diamètre pouvant aller de 5 à environ 24 microns. La composition d'ensimage selon l'invention est notamment adaptée à la production de fils fins (de titre inférieur à 600 tex) collectés sous forme de stratifils, contrairement aux ensimages aqueux traditionnels.

La composition d'ensimage selon l'invention est déposée avantageusement au cours du procédé selon l'invention sur des filaments destinés à être rassemblés en fils puis est polymérisée sous l'action d'un traitement thermique, ledit traitement se faisant indépendamment de l'opération de fibrage (des dispositifs n'étant ainsi pas nécessaires en-dessous de chaque filière) et pouvant être effectué à différents stades du procédé après fibrage, les fils ensimés non traités thermiquement ne nécessitant pas de traitement particulier tel que le séchage avant le traitement thermique de polymérisation.

Le traitement thermique peut se faire sur les fils collectés ou lors de la réalisation d'un composite par association des fils ensimés à une matière organique. Dans le cas où la composition d'ensimage déposée sur les filaments selon le procédé de l'invention comprend au moins un amorceur thermique acide ou base de Lewis et/ou un autre composé permettant la polymérisation de l'ensimage, et où les fils obtenus sont collectés sous forme d'enroulements, le traitement thermique peut se faire sur les enroulements de fils préalablement à l'utilisation des fils, notamment dans des applications textiles. Si le traitement thermique se fait au niveau des enroulements de fils avant débobinage des fils, il est souhaitable que les spires de fil constituant lesdits enroulements présentent un angle de croisure au moins égal à 1,5° pour éviter des collages entre spires par l'intermédiaire de l'ensimage polymérisé, ces collages rendant le dévidage des fils difficile.

Notons que le traitement thermique en présence d'un amorceur acide ou base de Lewis doit être suffisamment long pour permettre la décomposition de l'amorceur. Ainsi, les temps de traitement pour des fils collectés sous forme de stratifils de plusieurs kilogrammes peuvent aller de 3 à 6 heures à 160°C selon la forme et le poids du stratifil. Cependant, la majeure partie du temps de traitement est uniquement consacrée à l'élévation de température de la masse de verre contenue dans l'enroulement (à titre de comparaison, un échantillon de 50 grammes initialement à 25°C d'un ensimage selon l'invention mis dans une étuve à 160°C nécessite généralement un temps de traitement compris entre 15 et 45 minutes).

Les fils obtenus après rassemblement des filaments peuvent non seulement être collectés sous forme d'enroulements sur un support en rotation mais peuvent également être collectés sur des supports récepteurs en translation. Ils peuvent en effet être projetés par un organe servant également à les étirer, vers la surface de collecte se déplaçant transversalement à la direction des fils projetés en vue d'obtenir une nappe de fils continus entremêlés appelée « mat », auquel cas le traitement thermique peut se faire sur les fils répartis sur la surface de collecte. Le cas échéant, un liant (ce liant pouvant, éventuellement, comprendre et apporter à l'ensimage un composé permettant sa polymérisation tel qu'un amorceur acide ou base de Lewis) peut avoir été pulvérisé sur le mat avant traitement thermique de l'ensemble et le traitement thermique peut permettre de polymériser à la fois le liant et l'ensimage.

Les fils peuvent également être coupés avant collecte par un organe servant également à les étirer, les fils coupés étant collectés sur des supports récepteurs en translation, auquel cas le traitement thermique se fait préférentiellement au niveau des fils coupés répartis sur les supports récepteurs (l'ensimage déposé sur les filaments comprenant dans ce cas avantageusement au moins un amorceur thermique acide ou base de Lewis).

Lorsque les fils sont collectés sur un ou des supports en translation et lorsque le traitement thermique se fait sur le ou les supports, le temps de traitement est de l'ordre de 15 à 20 minutes.

Les fils peuvent également être collectés sans être soumis à un traitement thermique, le traitement thermique se faisant ultérieurement. Notamment, les fils peuvent être collectés sous forme d'enroulements, puis être extraits desdits enroulements pour subir des traitements supplémentaires (par exemple pour être coupés par un organe servant également à les entraîner mécaniquement), le traitement thermique pouvant se faire sur les fils avant, pendant ou après le ou les traitements supplémentaires (notamment pour la coupe, le traitement thermique peut se faire sur l'organe de collecte des fils coupés...).

Les fils ensimés peuvent également être collectés sans avoir été traités thermiquement, puis être traités thermiquement après association avec une matière organique lors de la réalisation d'un composite, ladite matière organique comprenant, dans le cas où l'ensimage déposé sur les filaments ne comprend pas de composé permettant la polymérisation de l'ensimage et éventuellement dans le cas où il en contient, au moins un composé permettant la polymérisation de l'ensimage, notamment au moins un amorceur thermique acide ou base de Lewis, et apportant ledit composé audit ensimage lors de l'association des fils ensimés à ladite matière. Selon la matière organique utilisée et éventuellement le ou les amorceurs et/ou catalyseurs... se trouvant dans ladite matière, le traitement thermique peut s'accompagner d'un traitement par rayonnement ultraviolet, d'un traitement par faisceau d'électrons, etc. Le temps de traitement thermique lors de la réalisation d'un composite est généralement d'au moins 2 heures.

Les fils de verre revêtus de l'ensimage selon l'invention et/ou obtenus selon le procédé de l'invention sont revêtus d'un ensimage non polymérisé, ou d'un ensimage polymérisé après traitement thermique. Ces fils présentent une perte au feu avantageusement inférieure à 3 % en poids et, de préférence, inférieure à 1,5 %. La faible quantité d'ensimage déposée sur le fil permet de réduire considérablement les problèmes de collage entre fils, notamment lorsqu'ils sont collectés sous forme d'enroulements, permet également une meilleure ouverture du fil lors de l'imprégnation par une matière à renforcer et est économiquement avantageuse.

Les fils obtenus selon l'invention sont aisément manipulables et peuvent, après collecte, se trouver sous différentes formes nécessitant ou non des étapes supplémentaires de traitement des fils, ces étapes se faisant avant ou après le traitement thermique et/ou la collecte des fils. Les fils de verre peuvent ainsi se présenter sous forme de fils continus, de fils coupés, peuvent avoir été assemblés sous forme de tresses, de rubans, de mats ou de réseaux, tissés ou non...

Les composites avantageusement obtenus par association d'au moins des fils de verre selon l'invention et d'au moins une matière organique et/ou inorganique, présentent de bonnes propriétés mécaniques comme illustré ci-après dans les exemples.

D'autres avantages et caractéristiques de l'invention apparaîtront à la lumière des exemples suivants donnant des exemples de compositions d'ensimage selon l'invention et des caractéristiques des fils revêtus de ces compositions ou des caractéristiques des composites comprenant lesdits fils.

### EXEMPLE 1

Des filaments de 14 microns de diamètre obtenus par étirage de filets de verre fondu selon le procédé de l'invention sont revêtus de l'ensimage de composition suivante exprimée en pourcentages pondéraux :

### Composants du système de base de masse moléculaire inférieure à 750

- 1,2 époxyhexadécane⁽¹⁾ 23%
- 1,4 butanediol diglycidyl éther⁽²⁾ 26 %
- résine type bisphénol A époxydée⁽³⁾ 30%

⁽¹⁾ Commercialisé sous la référence « UVR 6216 » par la Société UNION CARBIDE
⁽²⁾ Commercialisé sous la référence « Heloxy 67 » par la Société SHELL
⁽³⁾ Commercialisé sous la référence « Araldite GY 250 » par la Société CIBA GEIGY

### Amorceur acide de Lewis

- complexe trifluorure de bore/éthylamine⁽⁴⁾ 3 %
- carbonate de propylène 3 %

⁽⁴⁾ Commercialisé sous la référence « HT 973 » par la Société CIBA GEIGY

### Additifs

- agent de couplage gamma-méthacryloxypropyl triméthoxysilane⁽⁵⁾ 10 %
- agent textile palmitate d'isopropyle 5 %

⁽⁵⁾ Commercialisé sous la référence « Silquest A 174 » par la Société OSI

Cette composition présente une viscosité de 40 cP à 20°C. Les filaments sont rassemblés en fils, lesquels sont bobinés pendant 3600 secondes sous forme de stratifils présentant une masse approximative de 20 kg, puis les stratifils sont chauffés à 160°C pendant 180 minutes.

Les fils sont ensuite extraits des enroulements pour mesurer leur force et leur ténacité de rupture en traction dans les conditions définies par la norme ISO 3341. Les résultats sur 8 à 10 éprouvettes (avec les écarts types indiqués entre parenthèses) sont rapportés dans le tableau comparatif I en annexe donnant également le titre et la perte au feu des fils obtenus.

A partir des fils, des plaques composites à fils parallèles sont réalisées conformément à la norme NF 57152. La résine renforcée est la résine polyester M 402 commercialisée sous cette référence par la Société CIBA GEIGY à laquelle on ajoute, pour 100 parts en poids de résine polyester, 20 parts d'un assouplisseur commercialisé sous la référence « F 8010 C » par la Société CIBA GEIGY, 16,5 parts de styrène et 1,5 parts d'un accélérateur commercialisé sous la référence « THM 60 » par la société CIBA GEIGY.

Les propriétés mécaniques présentées par ces plaques, en flexion et en cisaillement, sont mesurées respectivement selon les normes ISO 178 et ISO 4585, avant vieillissement et après immersion de ces plaques dans l'eau à 98°C pendant 24 h. Les résultats obtenus sur 8 à 10 éprouvettes sont rapportés dans le tableau comparatif II en annexe donnant le taux de verre en poids des plaques réalisées, le type de résine utilisée pour les plaques, la contrainte de rupture en flexion, pour le taux de verre précité et pour un taux de verre ramené à 100 %, avant et après vieillissement, et la contrainte de rupture en cisaillement avant et après vieillissement. Les écarts types sont indiqués entre parenthèses.

### EXEMPLE 2

Des enroulements de fils traités thermiquement sont obtenus comme dans l'exemple 1. Les fils sont ensuite extraits des enroulements pour mesurer leur résistance à l'abrasion. Cette résistance est évaluée en pesant la quantité de bourre formée après passage des fils sur une série de tiges. Pour différents fils revêtus de l'ensimage polymérisé décrit dans l'exemple 1, la quantité de bourre pesée à l'issue du test et exprimée en milligrammes de bourre par kilogramme de fil testé est de l'ordre de 15 mg par kg de fil.

A titre de comparaison, des fils revêtus d'un ensimage aqueux à base d'une émulsion de résine époxy, de silanes et de tensioactifs, ces fils étant séchés selon des méthodes ordinaires peuvent former 200 voire 500 mg de bourre par kg de fil.

A partir de fils obtenus présentant un titre de 326 tex environ et une perte au feu de 0,54 % environ, des plaques composites sont réalisées conformément à la norme NF 57152. La résine renforcée est la résine époxy CY 205 commercialisée sous cette référence par la Société CIBA GEIGY à laquelle on ajoute, pour 100 parts en poids de résine époxy, 32 parts en poids d'un durcisseur commercialisé sous la référence « HT 972 » par la société CIBA GEIGY .

Les propriétés mécaniques des plaques obtenues sont mesurées comme dans l'exemple 1, avant vieillissement et après immersion des plaques dans l'eau à 98°C pendant cette fois 72 heures (tableau II).

### EXEMPLE 3

Des filaments de 10 microns de diamètre obtenus selon l'invention sont revêtus de l'ensimage de composition suivante (pourcentages pondéraux) :

### Composants du système de base de masse moléculaire inférieure à 750

- crésyl glycidyl éther⁽⁶⁾ 22 %
- 1,4 butanediol diglycidyl éther⁽²⁾ 27 %
- triméthylolpropane triglycidyl éther⁽⁷⁾ 38 %

⁽⁶⁾ Commercialisé sous la référence « Heloxy 62 » par la Société SHELL
⁽⁷⁾ Commercialisé sous la référence « Heloxy 5048 » par la Société SHELL

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 10 %

Cette composition présente une viscosité de 102 cP à 25°C. Les filaments sont rassemblés en fils, lesquels sont bobinés pour donner des gâteaux présentant une masse approximative de 6,5 kg puis sont chauffés à 160°C pendant 180 minutes. Les fils sont ensuite extraits des enroulements pour mesurer leur force et leur ténacité de rupture en traction comme dans l'exemple 1 (tableau I).

### EXEMPLE 4

Des filaments de 14 microns de diamètre obtenus selon l'invention sont revêtus de l'ensimage de composition suivante (pourcentages pondéraux) :

### Composants du système de base de masse moléculaire inférieure à 750

- 1,2 époxyhexadécane⁽¹⁾ 21 %
- 1,4 butanediol diglycidyl éther⁽²⁾ 26 %
- 3,4-époxycyclohexylméthyl-3,4 époxycyclohexanecarboxylate⁽⁸⁾ 37 %

⁽⁸⁾ Commercialisé sous la référence « UVR 6110 » par la Société UNION CARBIDE

### Amorceur acide de Lewis

- complexe trifluorure de bore/éthylamine⁽⁴⁾ 3 %
- carbonate de propylène 3 %

### Additif

- agent de couplage gamma-glycidoxypropyl triméthoxysilane⁽⁹⁾ 10 %

⁽⁹⁾ Commercialisé sous la référence « Silquest A 187 » par la Société OSI

Ces filaments sont rassemblés en fils, lesquels sont bobinés pendant 2400 secondes sous forme de stratifils présentant une masse approximative de 13 kg. Les fils ainsi collectés ne sont pas traités thermiquement.

A partir de ces fils, s'extrayant facilement des enroulements obtenus, des plaques composites sont réalisées de la même façon que dans l'exemple 2 puis traités thermiquement et les propriétés mécaniques de ces plaques mesurées dans les mêmes conditions que dans l'exemple 2 sont rapportées dans le tableau II.

### EXEMPLE 5

Des filaments de 9 microns de diamètre obtenus selon l'invention sont revêtus de l'ensimage de composition suivante (pourcentages pondéraux) :

### Composants du système de base de masse moléculaire inférieure à 750

- 1,2 époxyhexadécane⁽¹⁾ 15 %
- 1,4 butanediol diglycidyl éther⁽²⁾ 24 %
- 3,4-époxycyclohexylméthyl-3,4 époxycyclohexanecarboxylate⁽⁸⁾ 30 %

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 5 %
- agent de couplage gamma-glycidoxypropyl triméthoxysilane⁽⁹⁾ 9 %
- agent filmogène alpha, oméga glycidoxy-alkyl-polydiméthyl siloxane⁽¹⁰⁾ 10 %
- agent textile adipate d'éthylène glycol⁽¹¹⁾ 4 %

⁽¹⁰⁾ Commercialisé sous la référence « Tegomer Si 2130 » par la Société GOLDSCHMIDT
⁽¹¹⁾ Commercialisé sous la référence « Uraplast S 5672 » par la Société DSM

Cette composition présente une viscosité de 36 cP à 25°C. Les filaments sont rassemblés en fils, lesquels sont bobinés pendant 1200 secondes sous forme de gâteaux présentant une masse approximative de 4,3 kg, puis les gâteaux sont chauffés à 160°C pendant 180 minutes.

Les fils sont ensuite extraits des enroulements pour mesurer leur force et leur ténacité de rupture en traction comme dans l'exemple 1 (tableau I).

La résistance à l'abrasion des fils est également mesurée comme dans l'exemple 2. La quantité de bourre pesée à l'issue du test est de l'ordre de 100 mg par kg de fil.

### EXEMPLE 6

Des filaments de 14 microns de diamètre obtenus selon l'invention sont revêtus de l'ensimage de composition suivante (pourcentages pondéraux) :

### Composants du système de base de masse moléculaire inférieure à 750

- crésyl glycidyl éther⁽⁶⁾ 22 %
- cyclohexanediméthanol divinyl éther⁽¹²⁾ 25 %
- résine type bisphénol A époxydée acrylée⁽¹³⁾ 35 %

⁽¹²⁾ Commercialisé sous la référence « C.H.V.E. » par la Société INTERNATIONAL SPECIALITY PRODUCTS
⁽¹³⁾ Commercialisée sous la référence « Ebecryl 3605 » par la Société UNION CHIMIQUE BELGE

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 10 %
- agent de couplage gamma-glycidoxypropyl triméthoxysilane⁽⁹⁾ 5 %

Cette composition présente une viscosité de 84 cP à 20°C. Les filaments sont rassemblés en fils, lesquels sont bobinés pendant 2400 secondes sous forme de stratifils présentant une masse approximative de 13 kg puis sont chauffés à 160°C pendant 180 minutes. La force et la ténacité de rupture en traction des fils sont ensuite mesurées comme dans l'exemple 1 (tableau I).

La résistance à l'abrasion des fils est également mesurée comme dans l'exemple 2. La quantité de bourre pesée à l'issue du test est de l'ordre de 5,8 mg par kg de fil.

A partir des fils obtenus, des plaques composites sont réalisées comme dans l'exemple 1 et les propriétés mécaniques de ces plaques mesurées comme dans l'exemple 1 sont rapportées dans le tableau comparatif II.

### EXEMPLE 7

Des filaments obtenus selon l'invention sont revêtus de l'ensimage de composition suivante (pourcentages pondéraux) :

### Composants du système de base de masse moléculaire inférieure à 750

- cyclohexanediméthanol diglycidyl éther⁽¹⁴⁾ 35 %
- crésyl glycidyl éther⁽⁶⁾ 27 %

⁽¹⁴⁾ Commercialisé sous la référence « Heloxy 107 » par la Société SHELL

### Composants du système de base de masse moléculaire supérieure à 750

- polybutadiène époxydé hydroxylé de masse moléculaire moyenne 1800⁽¹⁵⁾ 25 %

⁽¹⁵⁾ Commercialisé sous la référence « Poly Bd 600 » par la Société ELF ATOCHEM

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 10 %

Cette composition présente une viscosité de 186 cP à 25°C. Les filaments sont rassemblés en fils, lesquels sont bobinés sous forme de stratifils présentant une masse approximative de 17 kg, puis les stratifils sont chauffés à 160°C pendant 240 minutes. La force et la ténacité de rupture en traction des fils sont ensuite mesurées comme dans l'exemple 1 (tableau I).

### EXEMPLE 8

Un ensimage selon l'invention présente la composition suivante (pourcentages pondéraux) :

### Composants du système de base de masse moléculaire inférieure à 750

- 3,4-époxy cyclohexylméthyl-3,4-époxycyclohexane carboxylatepurifié⁽¹⁶⁾ 35 %
- crésyl glycidyl éther⁽⁶⁾ 25 %
- cyclohexanediméthanol diglycidyl éther⁽¹⁴⁾ 10 %
- Σ-caprolactone triol⁽¹⁷⁾ 15%

⁽¹⁶⁾ Commercialisé sous la référence « UVR 6105 » par la Société UNION CARBIDE
⁽¹⁷⁾ Commercialisé sous la référence « Tone 0305 » par la Société UNION CARBIDE

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 12 %

Cette composition d'ensimage présente une viscosité de 92 cP à 20°C.

### EXEMPLE 9

Un ensimage selon l'invention présente la composition suivante (pourcentages pondéraux) :

### Composants du système de base de masse moléculaire inférieure à 750

- 2-éthylhexyl glycidyl éther⁽¹⁸⁾ 25 %
- cyclohexanediméthanol diglycidyl éther⁽¹⁴⁾ 35 %

⁽¹⁸⁾ Commercialisé sous la référence « Heloxy 116 » par la Société SHELL

### Composants du système de base de masse moléculaire supérieure à 750

- polybutadiène hydroxylé de masse moléculaire moyenne 1220⁽¹⁹⁾ 20 %

⁽¹⁹⁾ Commercialisé sous la référence « Poly Bd R20LM » par la Société ELF ATOCHEM

### Amorceur acide de Lewis

- complexe trifluorure de bore/éthylamine⁽⁴⁾ 3 %

### Additifs

- agent de couplage gamma-méthacryloxypropyl triméthoxysilane⁽⁵⁾ 8 %
- agent de couplage gamma-glycidoxypropyl triméthoxysilane⁽⁹⁾ 5 %
- agent textile palmitate d'isopropyle 4 %

Cette composition d'ensimage présente une viscosité de 72 cP à 20°C.

### EXEMPLE 10

Des filaments de 14 microns de diamètre obtenus selon l'invention sont revêtus de l'ensimage de composition suivante (pourcentages pondéraux) :

### Composants du sytème de base de masse moléculaire inférieure à 750

- triglycidyl éther du paraaminophénol⁽²⁰⁾ 35 %
- crésyl glycidyl éther⁽⁶⁾ 45 %

⁽²⁰⁾ Commercialisé sous la référence « Araldite MY 500 » par la Société CIBA GEIGY

### Amorceur base de Lewis

- N méthyl diéthanolamine⁽²¹⁾ 4 %

⁽²¹⁾ Commercialisé par la Société MERCK

### Additifs

- agent de couplage gamma-méthacryloxypropyl triméthoxysilane⁽⁵⁾ 10 %
- agent textile palmitate d'isopropyle 6 %

Cette composition présente une viscosité de 72 cP à 20°C. Les filaments sont rassemblés en fils, lesquels sont bobinés pendant 2400 secondes sous forme de stratifils présentant une masse approximative de 13 kg, puis les stratifils sont chauffés à 140°C pendant 8 heures.

Les fils sont ensuite extraits des enroulements pour mesurer leur force et leur ténacité de rupture en traction comme dans l'exemple 1 (tableau I).

La résistance à l'abrasion des fils est également mesurée comme dans l'exemple 2. La quantité de bourre pesée à l'issue du test est inférieure à 1 mg par kg de fil (traces).

### EXEMPLE 11

Des filaments de 9 microns de diamètre obtenus selon l'invention sont revêtus de l'ensimage de composition suivante (pourcentages pondéraux) :

### Composants du sytème de base de masse moléculaire inférieure à 750

- triglycidyl éther du paraaminophénol⁽²⁰⁾ 35 %
- crésyl glycidyl éther⁽⁶⁾ 45 %

⁽²⁰⁾ Commercialisé sous la référence « Araldite MY 500 » par la Société CIBA GEIGY

### Amorceur base de Lewis

- 2,4,6 tri-diméthylaminométhyl phénol⁽²²⁾ 4 %

⁽²²⁾ Commercialisé sous la référence « Actiron NX 3 » par la Société PROTEX (23) Commercialisé sous la référence « Actiron NXJ 60 » par la Société PROTEX

### Additifs

- agent de couplage gamma-méthacryloxypropyl triméthoxysilane⁽⁵⁾ 10 %
- agent textile palmitate d'isopropyle 6 %

Cette composition présente une viscosité de 72 cP à 20°C. Les filaments sont rassemblés en fils, lesquels sont bobinés et chauffés comme dans l'exemple 10.

Les fils sont ensuite extraits des enroulements pour mesurer leur force et leur ténacité de rupture en traction comme dans l'exemple 1 (tableau I).

La résistance à l'abrasion des fils est également mesurée comme dans l'exemple 2. La quantité de bourre pesée à l'issue du test est inférieure à 1 mg par kg de fil (traces).

### EXEMPLE 12

Des filaments de 14 microns de diamètre obtenus selon l'invention sont revêtus de l'ensimage de composition suivante (pourcentages pondéraux) :

### Composants du sytème de base de masse moléculaire inférieure à 750

- triméthylolpropane triglycidyl éther⁽⁷⁾ 30 %
- 1,4 butanediol diglycidyl éther⁽²⁾ 30 %
- 2-éthylhexyl glycidyl éther⁽¹⁸⁾ 20 %

⁽¹⁸⁾ Commercialisé sous la référence « Heloxy 116 » par la Société SHELL

### Amorceur base de Lewis

- 2 propyl imidazole 4 %

### Additifs

- agent de couplage gamma-méthacryloxypropyl triméthoxysilane⁽⁵⁾ 10 %
- agent textile palmitate d'isopropyle 6 %

Cette composition présente une viscosité de 40 cP à 20°C. Les filaments sont rassemblés en fils, lesquels sont bobinés et chauffés comme dans l'exemple 10.

Les fils sont ensuite extraits des enroulements pour mesurer leur force et leur ténacité de rupture en traction comme dans l'exemple 1 (tableau I).

La résistance à l'abrasion des fils est également mesurée comme dans l'exemple 2. La quantité de bourre pesée à l'issue du test est de 1 mg par kg de fil.

### EXEMPLE COMPARATIF

Les caractéristiques mécaniques des composites obtenus à l'aide des fils décrits dans les exemples 1, 2 ,4 et 6 sont comparées aux caractéristiques mécaniques des composites obtenus à l'aide de fils de référence revêtus d'un ensimage aqueux à base d'une émulsion de résine époxy, de silanes et de tensioactifs, ces derniers composites étant réalisés de la même façon que dans les exemples 1 et 2 respectivement et les propriétés mécaniques de ces derniers composites mesurées comme dans les exemples 1 et 2 respectivement étant rapportées dans le tableau comparatif II.

On observe dans les exemples précédents que les fils revêtus d'ensimage selon l'invention sont aisément manipulables, qu'il aient été traités thermiquement ou non, et présentent de bonnes propriétés de résistance à la traction. De façon remarquable et avantageuse, les propriétés de résistance à la traction des fils revêtus d'ensimage selon l'invention sont meilleures après vieillissement que celles obtenues avant vieillissement des fils ensimés.

Les fils obtenus selon l'invention présentent par ailleurs une faible perte au feu, une bonne résistance à l'abrasion et permettent de renforcer efficacement des matières organiques et/ou inorganiques.

Les faibles taux de bourre obtenus lors des tests de résistance à l'abrasion des fils (les résultats obtenus pour des compositions comprenant des bases de Lewis sont, à ce sujet, particulièrement surprenants) et les bonnes propriétés de résistance à la traction desdits fils permettent également de dire que les fils obtenus selon l'invention présentent une bonne intégrité. La plupart des fils ensimés traités thermiquement obtenus dans les exemples 1 à 3, 5 à 7 et 10 à 12 sont en effet particulièrement aptes au tissage.

Les fils revêtus d'ensimage selon l'invention permettent d'obtenir des composites présentant des propriétés mécaniques aussi bonnes que celles des composites obtenus à partir de fils revêtus d'ensimages aqueux traditionnels. De plus, les fils revêtus d'ensimage selon l'invention non traité thermiquement peuvent facilement être imprégnés par des matières à renforcer et permettent d'obtenir des composites présentant certaines propriétés mécaniques améliorées (telles que la résistance au cisaillement).

Il convient de remarquer également que les fils obtenus donnent de bons résultats en texturation.

On observe enfin que les propriétés des fils revêtus d'un ensimage selon l'invention comprenant une base de Lewis sont meilleures que celles des fils revêtus d'un ensimage selon l'invention comprenant un acide de Lewis, pour une perte au feu plus faible.

Les fils de verre selon l'invention peuvent servir à diverses applications, par exemple à des applications textiles telles que la fabrication de chaînes par ourdissage, ou directement à des applications de renforcement telles que le renforcement de matières organiques (par exemple des matières plastiques) ou inorganiques (par exemple des matières cimentaires) pour obtenir des produits composites.

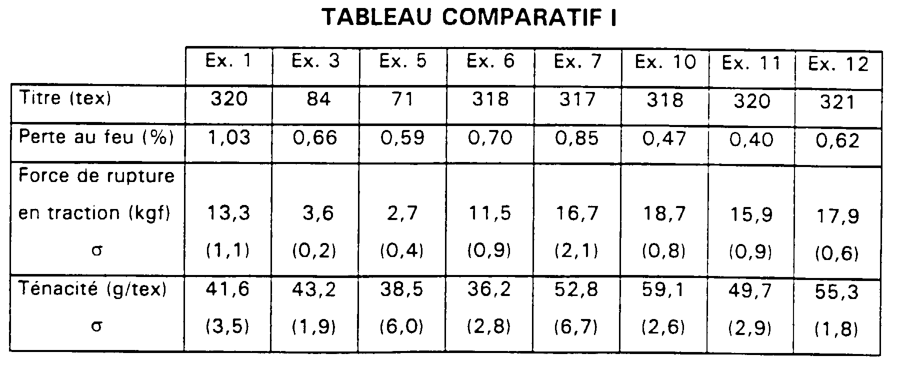

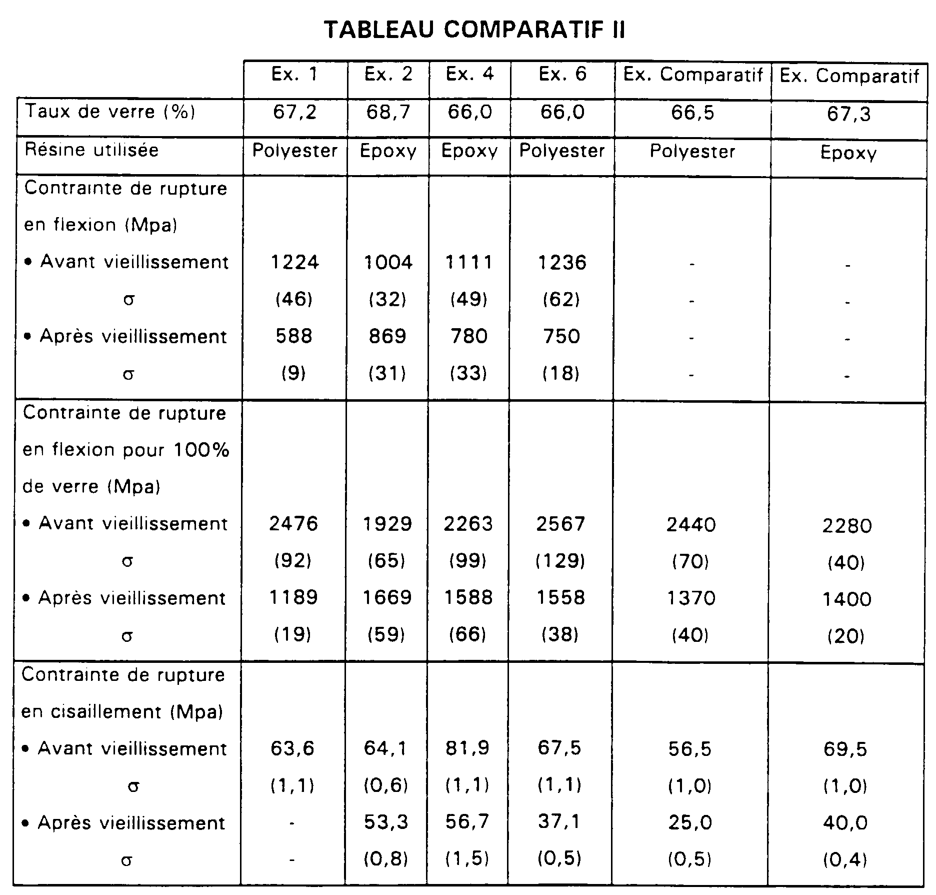

## Revendications

1. Composition d'ensimage constituée d'une solution de viscosité inférieure ou égale à 400 cP comprenant moins de 5 % en poids de solvant et comprenant au moins un système de base polymérisable et/ou réticulable thermiquement, ledit système de base comprenant au moins 60 % en poids d'un ou plusieurs composants de masse moléculaire inférieure à 750 présentant au moins une fonction réactive époxy, la composition d'ensimage comprenant, en outre, au moins un amorceur thermique acide ou base de Lewis.

2. Composition selon la revendication 1, caractérisée en ce que le système de base comprend un ou plusieurs composants présentant au moins une fonction réactive époxy et/ou une fonction réactive hydroxy et/ou une fonction réactive vinyléther.

3. Composition selon l'une des revendications 1 ou 2, caractérisée en ce qu'elle comprend en outre au moins un agent de couplage dans des proportions comprises entre 0 et 20 % en poids.

4. Composition selon l'une des revendications 1 à 3, caractérisée en ce qu'elle comprend en outre au moins un agent filmogène dans des proportions comprises entre 0 et 15 % en poids.

5. Composition selon l'une des revendications 1 à 4, caractérisée en ce qu'elle comprend en outre au moins un agent textile dans des proportions comprises entre 0 et 15 % en poids.

6. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils une composition d'ensimage constituée d'une solution de viscosité inférieure ou égale à 400 cP comprenant moins de 5 % en poids de solvant et comprenant au moins un système de base polymérisable et/ou réticulable thermiquement, ledit système de base comprenant au moins 60 % en poids d'un ou plusieurs composants de masse moléculaire inférieure à 750 présentant au moins une fonction réactive époxy, cette composition étant soumise à un traitement thermique en présence d'au moins un amorceur thermique acide ou base de Lewis pendant ou après la collecte des fils revêtus de ladite composition.

7. Procédé de production de fils de verre ensimés selon lequel on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement, ledit procédé consistant à déposer à la surface des filaments en cours d'étirage et avant rassemblement des filaments en fils une composition d'ensimage selon l'une des revendications 1 à 5.

8. Procédé selon la revendication 7, caractérisé en ce que la composition d'ensimage est soumise à un traitement thermique en présence d'au moins un amorceur thermique acide ou base de Lewis pendant ou après la collecte des fils revêtus de ladite composition.

9. Procédé selon l'une des revendications 6 à 8, caractérisé en ce que les fils sont collectés sous forme d'enroulements sur un support en rotation, l'angle de croisure des enroulements étant au moins égal à 1,5°.

10. Procédé selon l'une des revendications 6 à 8, caractérisé en ce que les fils ensimés obtenus après rassemblement des filaments sont projetés par un organe servant également à les étirer vers une surface de collecte se déplaçant transversalement à la direction des fils projetés en vue d'obtenir une nappe de fils continus entremêlés.

11. Procédé selon l'une des revendications 6 à 8, caractérisé en ce que les fils ensimés obtenus après rassemblement des filaments sont coupés avant collecte par un organe servant également à les étirer.

12. Procédé selon l'une des revendications 6 à 11, caractérisé en ce que les fils ensimés collectés sont mis en contact avec une matière organique à renforcer avant soumission de l'ensemble à un traitement thermique de façon à obtenir un composite.

13. Fils de verre ensimés, caractérisés en ce que les filaments qui les composent sont uniformément enduits d'une composition d'ensimage non polymérisée et non réticulée selon l'une des revendications 1 à 5.

14. Fils de verre ensimés, caractérisés en ce que les filaments qui les composent sont uniformément enduits d'une composition d'ensimage polymérisée et/ou réticulée, lesdits fils étant obtenus par un procédé selon l'une des revendications 6 ou 8.

15. Composite comprenant au moins une matière organique et/ou inorganique et des fils de verre ensimés, caractérisé en ce qu'il comprend au moins des fils de verre ensimés selon l'une des revendications 13 ou 14.

## Patentansprüche

1. Schlichtezusammensetzung, welche aus einer Lösung mit einer Viskosität von gleich oder niedriger als 400 cP besteht, die weniger als 5 Gew.-% Lösungsmittel und wenigstens ein thermisch polymerisierbares und/oder vernetzbares Basis-system umfasst, das mindestens 60 Gew.-% einer oder mehrerer Komponenten mit einer Molmasse von unter 750, die wenigstens eine reaktive Epoxyfunktion aufweisen, enthält, wobei die Schlichtezusammensetzung außerdem mindestens einen thermischen Lewissäure- oder Lewisbase-Starter umfasst.

2. Zusammensetzung nach Anspruch 1, **dadurch gekennzeichnet, dass** das Basissystem eine oder mehrere Komponenten enthält, die mindestens eine reaktive Epoxyfunktion und/oder reaktive Hydroxyfunktion und/oder reaktive Vinyletherfunktion aufweisen.

3. Zusammensetzung nach Anspruch 1 oder 2, **dadurch gekennzeichnet, dass** sie außerdem mindestens einen Haftvermittler in einem Anteil von zwischen 0 und 20 Gew.-% umfasst.

4. Zusammensetzung nach einem der Ansprüche 1 bis 3, **dadurch gekennzeichnet, dass** sie darüber hinaus mindestens ein filmbildendes Mittel in einem Anteil von zwischen 0 und 15 Gew.-% umfasst.

5. Zusammensetzung nach einem der Ansprüche 1 bis 4, **dadurch gekennzeichnet, dass** sie zusätzlich mindestens ein Textilhilfsmittel in einem Anteil von zwischen 0 und 15 Gew.-% umfasst.

6. Verfahren zur Herstellung von mit Schlichte überzogenen Glasfäden, gemäß welchem eine Vielzahl geschmolzener Glasstrahlen, die aus einer Vielzahl von Öffnungen fließen, die am Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, die auf einem sich bewegenden Träger gesammelt werden, wobei das Verfahren darin besteht, während des Ziehvorgangs und vor Vereinigung der Filamente zu Fäden eine Schlichtezusammensetzung aufzubringen, welche aus einer Lösung mit einer Viskosität von gleich oder niedriger als 400 cP besteht, die weniger als 5 Gew.-% Lösungsmittel und wenigstens ein thermisch polymerisierbares und/oder vernetzbares Basissystem umfasst, das mindestens 60 Gew.-% einer oder mehrerer Komponenten mit einer Molmasse von unter 750, die wenigstens eine reaktive Epoxyfunktion aufweisen, enthält, wobei diese Zusammensetzung in Gegenwart mindestens eines thermischen Lewissäure- oder Lewisbase-Starters während oder nach dem Sammeln der mit dieser Zusammensetzung überzogenen Fäden einer Wärmebehandlung unterzogen wird.

7. Verfahren zur Herstellung von mit Schlichte überzogenen Glasfäden, gemäß welchem eine Vielzahl geschmolzener Glasstrahlen, die aus einer Vielzahl von Öffnungen fließen, die am Boden einer oder mehrerer Spinndüsen angeordnet sind, zur Form einer oder mehrerer Bahnen aus endlosen Filamenten gezogen wird und anschließend die Filamente zu einem oder mehreren Fäden vereinigt werden, die auf einem sich bewegenden Träger gesammelt werden, wobei das Verfahren darin besteht, auf die Oberfläche der Filamente während des Ziehvorgangs und vor der Vereinigung der Filamente zu Fäden eine Schlichtezusammensetzung nach einem der Ansprüche 1 bis 5 aufzubringen.

8. Verfahren nach Anspruch 7, **dadurch gekennzeichnet, dass** die Schlichtezusammensetzung während oder nach dem Sammeln der mit dieser Zusammensetzung überzogenen Fäden einer Wärmebehandlung in Gegenwart mindestens eines thermischen Lewissäure- oder Lewisbase-Starters unterzogen wird.

9. Verfahren nach einem der Ansprüche 6 bis 8, **dadurch gekennzeichnet, dass** die Fäden in Form von Spulen auf einem sich drehenden Träger gesammelt werden, wobei der Kreuzungswinkel der Spulen mindestens 1,5° beträgt.

10. Verfahren nach einem der Ansprüche 6 bis 8, **dadurch gekennzeichnet, dass** die nach der Vereinigung der Filamente erhaltenen, mit Schlichte überzogenen Fäden von einer Einrichtung, die auch dazu dient, sie zu ziehen, auf eine Sammelfläche geschleudert werden, die sich quer zur Richtung der aufgeschleuderten Fäden bewegt, um eine Bahn aus miteinander vermengten endlosen Fäden zu erhalten.

11. Verfahren nach einem der Ansprüche 6 bis 8, **dadurch gekennzeichnet, dass** die nach der Vereinigung der Filamente erhaltenen, mit Schlichte überzogenen Fäden vor dem Sammeln von einer Einrichtung, die auch dazu dient, sie zu ziehen, zerschnitten werden.

12. Verfahren nach einem der Ansprüche 6 bis 11, **dadurch gekennzeichnet, dass** die gesammelten, mit Schlichte überzogenen Fäden mit einem zu verstärkenden organischen Material in Berührung gebracht werden, bevor der Aufbau einer Wärmebehandlung unterzogen wird, um einen Verbundwerkstoff herzustellen.

13. Mit Schlichte überzogene Glasfäden, **dadurch gekennzeichnet, dass** die sie bildenden Filamente gleichmäßig mit einer nicht polymerisierten und nicht vernetzten Schlichtezusammensetzung nach einem der Ansprüche 1 bis 5 überzogen sind.

14. Mit Schlichte überzogene Glasfäden, **dadurch gekennzeichnet, dass** die sie bildenden Filamente gleichmäßig mit einer polymerisierten und/oder vernetzten Schlichtezusammensetzung überzogen sind, wobei diese Fäden durch ein Verfahren nach Anspruch 6 oder 8 hergestellt werden.

15. Verbundwerkstoff, der mindestens ein organisches und/oder anorganisches Material und mit Schlichte überzogene Glasfäden umfasst, **dadurch gekennzeichnet, dass** er wenigstens mit Schlichte überzogene Glasfäden nach Anspruch 13 oder 14 enthält.

## Claims

1. Sizing composition which comprises a solution of a viscosity of less than or equal to 400 cP containing less than 5% by weight of solvent and containing at least one base system which can be thermally polymerised and/or thermally crosslinked, the said base system comprising at least 60% by weight of one or more components that have a molecular mass of less than 750 and that have at least one reactive epoxy function, the sizing composition also comprising at least one Lewis acid or base thermal initiator.

2. Composition according to claim 1, characterised in that the base system comprises one or more components having at least one reactive epoxy function and/or reactive hydroxy function and/or reactive vinyl ether function.

3. Composition according to either claim 1 or claim 2, characterised in that it also comprises at least one coupling agent in proportions between 0 and 20% by weight.

4. Composition according to any one of claims 1 to 3, characterised in that it also comprises at least one film-forming agent in proportions between 0 and 15% by weight.

5. Composition according to any one of claims 1 to 4, characterised in that it also comprises at least one textile agent in proportions between 0 and 15% by weight.

6. Process for the production of sized glass threads wherein a plurality of streams of molten glass flowing from a plurality of orifices arranged at the base of one or more die plates are drawn in the form of one or more fans of continuous filaments, and the filaments are then gathered into one or more threads which are collected on a moving support, the said process consisting in depositing on the surface of the filaments, in the course of the drawing operation and before the filaments are gathered into threads, a sizing composition constituted by a solution of a viscosity of less than or equal to 400 cP containing less than 5% by weight of solvent and containing at least one base system which can be thermally polymerised and/or thermally crosslinked, the said base system comprising at least 60% by weight of one or more components that have a molecular mass of less than 750 and that have at least one reactive epoxy function, the composition being subjected to a thermal treatment in the presence of at least one Lewis acid or base thermal initiator during or after the collection of the threads coated with the said composition.

7. Process for the production of sized glass threads wherein a plurality of streams of molten glass flowing from a plurality of orifices arranged at the base of one or more die plates are drawn in the form of one or more fans of continuous filaments, and the filaments are then gathered into one or more threads which are collected on a moving support, the said process consisting in depositing a sizing composition according to any one of claims 1 to 5 on the surface of the filaments in the course of the drawing operation and before the filaments are gathered into threads.

8. Process according to claim 7, characterised in that the sizing composition is subjected to a thermal treatment in the presence of at least one Lewis acid or base thermal initiator during or after the collection of the threads coated with the said composition.

9. Process according to any one of claims 6 to 8, characterised in that the threads are collected in the form of rolls on a rotating support, the angle of intersection of the rolls being at least 1.5°.

10. Process according to any one of claims 6 to 8, characterised in that the sized threads obtained after gathering the filaments are projected by a member, which is also used to draw them, towards a collecting surface moving transversely to the direction of the projected threads in order to obtain a fan of intermingled continuous threads.

11. Process according to any one of claims 6 to 8, characterised in that the sized threads obtained after gathering the filaments are cut before collection by a member which is also used to draw them.

12. Process according to any one of claims 6 to 11, characterised in that the collected sized threads are placed in contact with an organic material to be reinforced before subjecting the whole to a thermal treatment in order to obtain a composite.

13. Sized glass threads, characterised in that the filaments forming them are uniformly coated with a non-polymerised and non-crosslinked sizing composition according to any one of claims 1 to 5.

14. Sized glass threads, characterised in that the filaments forming them are uniformly coated with a polymerised and/or crosslinked sizing composition, the said threads being obtained by a process according to either claim 6 or claim 8.

15. Composite comprising at least one organic and/or inorganic material and sized glass threads, characterised in that it comprises at least some sized glass threads according to either claim 13 or claim 14.
